# EUROPÄISCHE PATENTANMELDUNG

(11) **EP 3 800 361 A1**
(43) Veröffentlichungstag der Anmeldung: **07.04.2021**
(21) Anmeldenummer: 19201068.4
(22) Anmeldetag: 02.10.2019
(51) Int. Cl.: F16B 5/06, F16B 5/02, F16B 43/00

(54) **VERANKERUNGSEINHEIT, VERFAHREN ZUM BEFESTIGEN EINER ANLAGE MIT EINER VERANKERUNGSEINHEIT UND ANLAGENEINHEIT MIT VERANKERUNGSEINHEIT**

(71) Anmelder: Siemens Aktiengesellschaft, 80333 München (DE)
(72) Erfinder: Spies, Alexander, 95478 Kemnath (DE); Plobner, Roland, 91284 Neuhaus (DE); Utz, Peter, 90762 Fürth (DE)

(57) **Zusammenfassung**

Die Erfindung betrifft eine Verankerungseinheit (1) für eine Anlage (20) mit wenigstens einer ersten Isolationsschicht (4) und wenigstens einer zweiten Isolationsschicht (5). Die Verankerungseinheit umfasst weiterhin eine Tragschicht (6) zum mechanischen stabilisieren der Isolationsschichten, wobei die Tragschicht zwischen der ersten Isolationsschicht und zweiten Isolationsschicht angeordnet ist. Die Verankerungseinheit umfasst weiterhin wenigstens zwei Schrauben, wobei die Schrauben entgegengesetzt ausgerichtet sind, wobei eine erste Schraube (2) zur Verankerung an der Anlage geeignet ist und eine zweite Schraube (3) zur Verankerung an einem Ankergegenstand (8) geeignet ist. Ein erster Schraubenkopf der ersten Schraube ist in direktem Kontakt mit der Tragschicht. Ein Schraubschaft der ersten Schraube ist wenigstens teilweise in der ersten Isolationsschicht angeordnet. Die Erfindung betrifft weiterhin ein Verfahren zum Befestigen einer Anlage mit der Verankerungseinheit und eine Anlageneinheit mit Anlage und Verankerungseinheit.

## Beschreibung

Die Erfindung betrifft eine Verankerungseinheit, ein Verfahren zum Befestigen einer Anlage mit einer Verankerungseinheit und eine Anlageneinheit mit Verankerungseinheit.

Die elektrische Isolierung einer Anlage zum Boden ist für viele Anlagentypen, insbesondere für Schaltschränke, Brennstoffzellen oder Elektrolyseanlagen, sicherheitsrelevant.
Es sind Standfüße bekannt, welche Gewindehülsen umfassen, die in ein elektrisch isolierendes Harz eingegossen sind. Diese Standfüße isolieren zwar elektrisch, jedoch ist ein Kurzschluss insbesondere über einen Wasserfluss über die Standfüße möglich. Nachteilig kann ein Kurzschluss somit nicht sicher ausgeschlossen werden.

Weiterhin sind die bekannten Standfüße stabil für Druckbelastungen auf den Standfuß selbst. Sie sind aber nachteilig nicht stabil für Zugbelastungen, wie sie insbesondere bei schwingenden Anlagenteilen oder Vibrationen der Anlage auf den Standfuß wirken können.

Es ist daher Aufgabe der Erfindung eine Verankerungseinheit anzugeben, die elektrisch isoliert ist und Zugbelastungen standhält. Weiterhin soll ein Verfahren zum Befestigen einer Anlage mit einer Verankerungseinheit und eine Anlage mit Verankerungseinheit angegeben werden.

Die Aufgabe wird mit einer Verankerungseinheit gemäß Anspruch 1, einem Verfahren zum Befestigen einer Anlage gemäß Anspruch 11 und einer Anlage gemäß Anspruch 13 gelöst.

Eine erfindungsgemäße Verankerungseinheit für eine Anlage umfasst wenigstens eine erste Isolationsschicht und wenigstens eine zweite Isolationsschicht. Sie umfasst weiterhin eine Tragschicht zum mechanischen Stabilisieren der Isolationsschichten, wobei die Tragschicht zwischen der ersten und zweiten Isolationsschicht angeordnet ist. Sie umfasst auch wenigstens zwei Schrauben, wobei die Schrauben entgegengesetzt ausgerichtet sind, wobei eine erste Schraube zur Verankerung an der Anlage geeignet ist und eine zweite Schraube zur Verankerung an einem Ankergegenstand geeignet ist. Ein erster Schraubschaft der ersten Schraube und/oder ein zweiter Schraubschaft der zweiten Schraube sind wenigstens teilweise von einer elektrisch isolierenden Isolationshülle umgeben.

Das erfindungsgemäße Verfahren zum Befestigen einer Anlage an einem Ankergegenstand umfasst mehrere Schritte. Zunächst erfolgt das Bereitstellen einer Verankerungseinheit mit wenigstens einer ersten Isolationsschicht, einer zweiten Isolationsschicht und mit einer Tragschicht zum mechanischen Stabilisieren der Isolationsschichten. Die Tragschicht ist zwischen der ersten Isolationsschicht und der zweiten Isolationsschicht angeordnet. Die Verankerungseinheit umfasst weiterhin zwei Schrauben, wobei die Schrauben entgegengesetzt ausgerichtet sind. Eine erste Schraube ist zur Befestigung der Verankerungseinheit an der Anlage geeignet. Eine zweite Schraube ist zu Verankerung der Verankerungseinheit am Verankerungsgegenstand geeignet. Ein erster Schraubschaft der ersten Schraube und/oder ein zweiter Schraubschaft der zweiten Schraube sind wenigstens teilweise von einer Isolationshülle umgeben. Die Verankerungseinheit wird mit der zweiten Schraube am Verankerungsgegenstand verankert. Die Verankerungseinheit wird mit der ersten Schraube an der Anlage verankert.

Eine erfindungsgemäße Anlage umfasst eine erfindungsgemäße Verankerungseinheit, wobei die erste Schraube fest mit der Anlage verbunden ist und die zweite Schraube fest mit dem Ankergegenstand verbunden ist.

Als Isolationsschicht wird hier eine Schicht bezeichnet, die elektrisch isoliert. Die Isolationsschicht kann die gesamte Trägerschicht bedecken. Sie kann aber auch als eine Art Scheibe um die Schraube angeordnet sein und somit nicht die gesamte Trägerschicht bedecken.

Die Tragschicht umfasst ein mechanisch stabiles Material. Sie kann insbesondere elektrisch leitende Materialien, wie Metalle, umfassen.

Vorteilhaft ermöglicht das entgegengesetzte Anordnen der beiden Schrauben, dass die Verankerungseinheit bei einer Verankerung in einem Ankergegenstand, insbesondere im Boden, nicht nur Druckbelastungen, sondern auch Zugbelastungen standhalten kann und eine elektrische Isolierung einer Anlage insbesondere zum Boden gewährleistet wird. Bei dem Vorliegen von Zugbelastungen wird die erste Schraube, die mit der Anlage verbunden ist, von der zweiten Schraube wegbewegt, die mit dem Ankergegenstand verbunden ist. Somit wird insbesondere die erste Schraube auf die Tragschicht und die erste Isolationsschicht gedrückt. Vorteilhaft wird dadurch die elektrische Isolierung auch bei Zugbelastungen aufrechterhalten. Auch schwingende Bewegungen der Anlage oder Vibrationen der Anlage, welche als im Wechsel auftretende Zug- und Druckbelastungen betrachtet werden können, werden vorteilhaft von der Verankerungseinheit aufgenommen, wobei die elektrische Isolierung zwischen Anlage und Ankergegenstand, insbesondere dem Boden, weiterhin gewährleistet wird.

Vorteilhaft ist weiterhin der erste Schraubschaft der ersten Schraube und/oder der zweite Schraubschaft der zweiten Schraube wenigstens teilweise von einer Isolationshülle umgeben. Die Isolationshülle kann bereits vor Einbringen in die Tragschicht und die Isolationsschicht um den Schraubschaft angeordnet sein. Es ist ebenso möglich, dass die Isolationshülle in einer Aussparung in der Tragschicht und der ersten Isolationsschicht angeordnet ist und die Schraube anschließend in die Isolationshülle eingeschraubt wird. Eine zusätzliche Isolationshülle isoliert die Schraube auch gegenüber der Tragschicht elektrisch. Somit werden vorteilhaft Kurzschlüsse verhindert. Dies erhöht die Sicherheit der elektrischen Isolation vorteilhaft.

Der Ankergegenstand kann insbesondere der Boden, Wände oder ein mechanisch stabiles Bauteil sein. Als Schraubschaft wird hier sowohl das Schraubgewinde einer Schraube als auch ein glatter Schaftteil bezeichnet.

In einer vorteilhaften Ausgestaltung und Weiterbildung der Erfindung ist ein zweiter Schraubschaft der zweiten Schraube wenigstens teilweise in der zweiten Isolationsschicht und oder ein erster Schraubschaft der ersten Schraube in der ersten Isolationsschicht angeordnet. Bei Zugbelastungen wird die zweite Schraube mit erhöhter Last an der Tragschicht und der zweiten Isolationsschicht befestigt. Vorteilhaft erfolgt eine elektrische Isolierung der Anlage dann mittels der ersten Isolationsschicht und der zweiten Isolationsschicht. In anderen Worten dürfen nicht beide Schrauben mit der Tragschicht in Kontakt sein. Um Kriechströme zu vermeiden sollte ein Zwischenraum, insbesondere ein luftgefüllter Zwischenraum, zwischen der Tragschicht und der Schraube vorliegen. Dies ermöglicht eine noch höhere Sicherheit der elektrischen Isolierung, insbesondere auch bei Zugbelastungen, bei Vibrationen und/oder Schwingungen.

In einer weiteren vorteilhaften Ausgestaltung und Weiterbildung der Erfindung sind wenigstens die erste Isolationsschicht und die Tragschicht von einer elastischen elektrisch isolierenden wasserdichten Abdeckung umgeben. Besonders vorteilhaft ist es, wenn die gesamte Verankerungseinheit von einer elektrisch isolierenden wasserdichten Abdeckung umgeben ist. Vorteilhaft wird somit vermieden, dass Wasser, welches über die Verankerungseinheit strömt, in die Verankerungseinheit eindringen kann und dort zu Kurzschlüssen führen könnte. Die wasserdichte Abdeckung gewährleistet vorteilhaft weiterhin, dass ein elektrischer Erdschluss vermieden wird.

In einer weiteren vorteilhaften Ausgestaltung und Weiterbildung der Erfindung ist die erste und/oder zweite Isolationsschicht als elastische elektrisch isolierende wasserdichte Abdeckung ausgestaltet. Vorteilhaft ist die Trägerschicht somit nur von einer Schicht umgeben. Dies spart vorteilhaft Material.

In einer weiteren vorteilhaften Ausgestaltung und Weiterbildung der Erfindung ist zwischen dem ersten Schraubkopf und der Tragschicht und/oder zwischen dem zweiten Schraubkopf und der Tragschicht eine isolierende Scheibe angeordnet. Diese isolierende Scheibe kann insbesondere als Unterlegscheibe ausgestaltet sein. Vorteilhaft wird mittels der Scheibe die Schraube an der Berührungsstelle zur Tragschicht elektrisch isoliert. Somit wird das Vorliegen eines Kurzschlusses innerhalb der Verankerungseinheit vermieden.

In einer weiteren vorteilhaften Ausgestaltung und Weiterbildung der Erfindung steht die erste Schraube in direktem Kontakt mit der zweiten Isolationsschicht. In anderen Worten berühren sich die erste Schraube und die zweite Isolationsschicht. In dieser Ausführung ist insbesondere der erste Schraubkopf gegenüber der Tragschicht über die zweite Isolationsschicht elektrisch isoliert. Vorteilhaft werden so Kurschlüsse innerhalb der Verankerungseinheit vermieden.

In einer weiteren vorteilhaften Ausgestaltung und Weiterbildung der Erfindung ist der Schraubschaft der zweiten Schraube in einer elastischen Hülle angeordnet. In anderen Worten ist der zweite Schraubschaft von einer elastischen Hülle umgeben. Vorteilhaft kann diese elastische Hülle thermische Ausdehnung des zu befestigenden Gegenstands, insbesondere eines Elektrolysemoduls, ausgleichen.

In einer weiteren vorteilhaften Ausgestaltung und Weiterbildung der Erfindung weist die Tragschicht eine erste Aussparung zum Versenken des Schraubkopfes der ersten Schraube auf und/oder eine zweite Aussparung, die auf der gegenüberliegenden Seite der Tragschicht versetzt zur ersten Aussparung zum Versenken des Schraubkopfes der zweiten Schraube, angeordnet ist. Vorteilhaft ragen somit keine Bauteile aus der Tragschicht heraus. Dies erleichtert vorteilhaft die Montage der Verankerungseinheit.

In einer weiteren vorteilhaften Ausgestaltung und Weiterbildung der Erfindung umfasst die Verankerungseinheit zwei erste Schrauben und zwei zweite Schrauben. Vorteilhaft kann die Anlage somit an zwei Auflagepunkten an dem Ankergegenstand befestigt werden. Die mechanische Stabilität, insbesondere hinsichtlich Zugbelastungen, Schwingungen und Vibrationen wird somit vorteilhaft nochmals erhöht.

In einer weiteren vorteilhaften Ausgestaltung und Weiterbildung der Erfindung sind die zwei ersten Schrauben und die zwei zweiten Schrauben spiegelsymmetrisch zu einer vertikal zum Ankergegenstand verlaufenden Symmetrieachse angeordnet. Vorteilhaft wird so das Gewicht der Anlage gleichmäßig auf die beiden zweiten Schrauben, welche mit dem Ankergegenstand verbunden sind, verteilt. Auch die Verteilung des Gewichts der Anlage über die erste Schraube erfolgt gleichmäßig. Somit werden die Bauteile vorteilhaft gleichmäßig beansprucht, was ihre Lebensdauer erhöht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:
Figur 1 eine Verankerungseinheit mit zwei Schrauben, zwei Isolationsschichten, einer Tragschicht sowie einer Isolationshülle;
Figur 2 eine Anlage mit einer Verankerungseinheit und einem Elektrolysemodul.

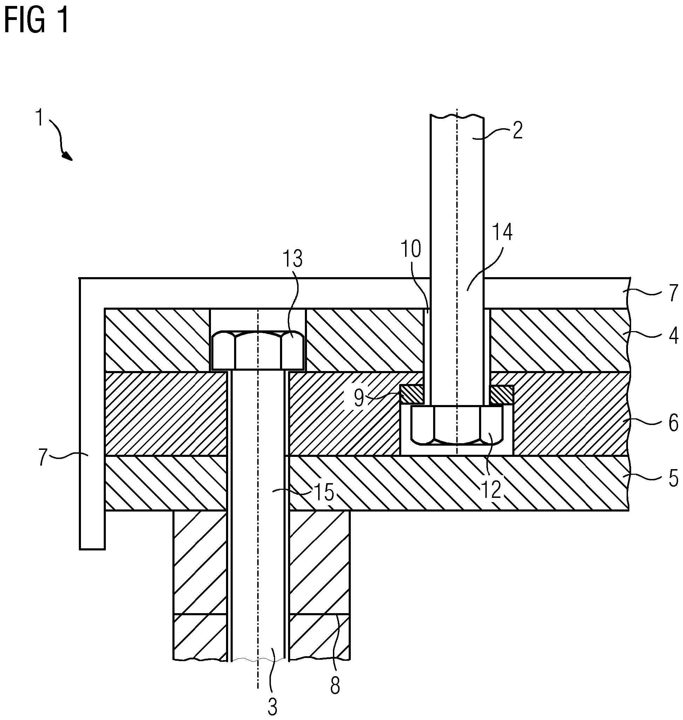

Figur 1 zeigt eine Verankerungseinheit 1 mit einer ersten Isolationsschicht 4 und einer zweiten Isolationsschicht 5. Zwischen der ersten Isolationsschicht 4 und der zweiten Isolationsschicht 5 ist eine Tragschicht 6 angeordnet. Eine erste Schraube 2 ist an der Tragschicht 6 befestigt. Die erste Schraube 2 durchdringt die erste Isolationsschicht 4. Somit ist sie wenigstens teilweise in der ersten Isolationsschicht 4 angeordnet. Eine zweite Schraube 3 ist ebenfalls an der Tragschicht 6 befestigt. Die zweite Schraube 3 ist entgegengesetzt zu der ersten Schraube 2 an der Tragschicht 6 befestigt. Die zweite Schraube 3 durchdringt die zweite Isolationsschicht 5. Somit ist die zweite Schraube 3 wenigstens teilweise in der zweiten Isolationsschicht 5 angeordnet.

Die erste Isolationsschicht 4, die Tragschicht 6, und die zweite Isolationsschicht 5 sind von einer Abdeckung 7 umgeben. Die zweite Schraube 3 ist fest mit einem Ankergegenstand 8 verbunden. Typischerweise ist der Ankergegenstand 8 der Boden. Es ist aber ebenso möglich, dass der Ankergegenstand 8 eine Wand oder ein festes Bauteil sein kann. Die erste Schraube 2 ist von einer elektrischen Isolationshülle 10 in dem Bereich der ersten Isolationsschicht 4 und der Tragschicht 6 umgeben. Weiterhin wird der Schraubkopf der ersten Schraube 12 von einer isolierenden Unterlegscheibe 9 von der Tragschicht 6 getrennt. Vorteilhaft erfolgt somit eine elektrische Isolierung der ersten Schraube 2 von der zweiten Schraube 3, wenn die Tragschicht 6 leitend ist. Die erste Schraube 2 ist in diesem Ausführungsbeispiel in einer Vertiefung in der Trägerschicht 6 versenkt.

Die Isolationshülle 10 kann zunächst in eine Aussparung in den Isolationsschichten und der Tragschicht 6 eingebracht werden. Anschließend kann die Schraube in Isolationshülle die 10 eingeschraubt werden. Alternativ ist es denkbar, dass die Schraube 2 zunächst in die Isolationshülle 10 geführt wird und anschließend durch die Tragschicht 6 und die erste Isolationsschicht 4 geschoben werden.

Zwischen dem Schraubkopf der ersten Schraube 12 und der Tragschicht 6 ist eine isolierende Unterlegscheibe 9 angeordnet. Diese verhindert den Kontakt des Schraubkopfes 12 zu der Tragschicht 6. Der erste Schraubkopf 12 weist einen Durchmesser auf, der kleiner ist als die Vertiefung in der Trägerschicht 6. In anderen Worten ist zwischen dem ersten Schraubkopf 12 und der Trägerschicht ein elektrisch isolierender Luftraum vorhanden. Vorteilhaft wird somit eine elektrische Isolierung der ersten Schraube von der zweiten Schraube sichergestellt.

Um eine elektrische Isolierung innerhalb der Verankerungseinheit zu gewährleisten, kann es ausreichen, dass nur eine der Schrauben in einer Isolationsschicht angeordnet ist. Insbesondere kann nur die ersten Schraube 2 in der ersten Isolationsschicht 4 und der Isolationshülle 10 angeordnet sein. Weiterhin kann die erste und/oder zweite Isolationsschicht 4, 5 als eine Scheibe um die Schraube ausgeführt sein.

Die Abdeckung 7 ist wasserdicht und elektrisch isoliert. In diesem Ausführungsbeispiel weist die erste Isolationsschicht 4 Aussparungen an der Stelle auf, an der der Schraubkopf der ersten Schraube 12 in die Isolationsschicht 4 eintaucht. Vorteilhaft kann somit die Abdeckung 7 den gesamten Schraubkopf mit abdecken und somit ebenfalls elektrisch isolieren. Sowohl der Schraubschaft der ersten Schraube 14 als auch der Schraubschaft der zweiten Schraube 15 sind wenigstens teilweise von einer Isolationsschicht umgeben. Vorteilhaft wird so die erste Schraube 2 von der zweiten Schraube 3 elektrisch isoliert. Die Abdeckung 7, welche wasserdicht und elektrisch isolierend ist, verhindert vorteilhaft das Eindringen von Wasser in die Verankerungseinheit 1, wodurch Kurzschlüsse vermieden werden.

Die Schrauben umfassen typischerweise Materialien aus Metall. Die Abdeckung umfasst insbesondere Materialien, welche gummielastische Eigenschaften haben. Das können insbesondere Acrylnitril-Butadien-Kautschuk (NBR), Ethylen-Propylen-DienKautschuk (EPDM) oder Fluorkautschuk (FPM) sein. Die erste Isolationsschicht 4 und die zweite Isolationsschicht 5 umfassen insbesondere Materialien wie Duroplaste oder Hartpapierwerkstoffe. Die Tragschicht 6 umfasst insbesondere Materialien wie Metalle, welche eine hohe Festigkeit und Zähigkeit aufweisen.

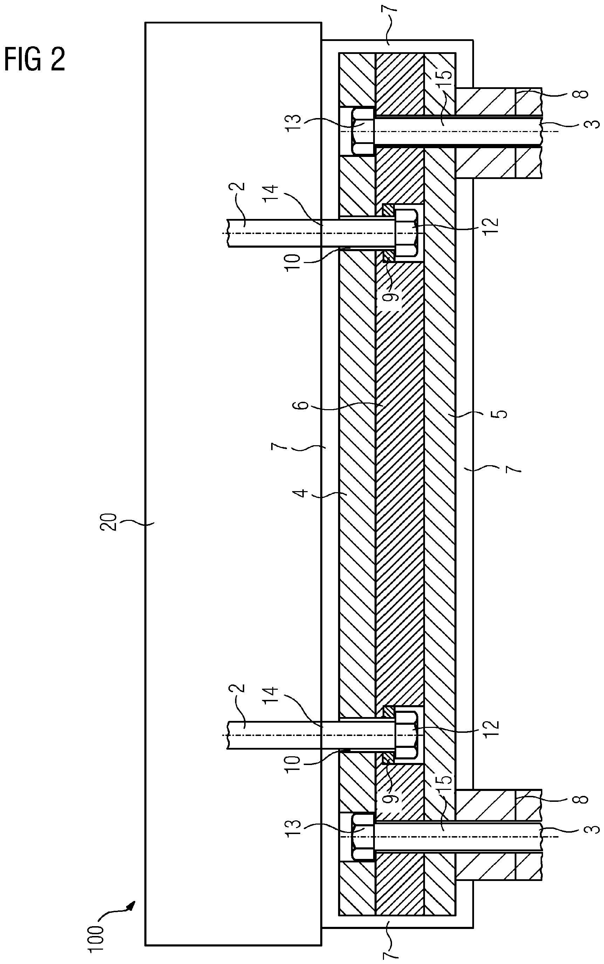

In Figur 1 ist nur eine Hälfte der Verankerungseinheit 1 angezeigt. Die Spiegel-Symmetrieachse kennzeichnet, dass die Verankerungseinheit 1 jeweils zwei erste Schrauben 2 und zwei zweite Schrauben 3 aufweist. Den kompletten Aufbau verdeutlicht Figur 2.

Figur 2 zeigt eine Anlageneinheit 100 mit einer Verankerungseinheit 1 und einem Elektrolysemodul 20 als Anlage. Der Aufbau der Verankerungseinheit 1 entspricht dem Aufbau des Ausführungsbeispiels aus Figur 1. Die Verankerungseinheit 1 ist hier fest mit dem Boden als Ankergegenstand 8 verbunden. Die beiden ersten Schrauben 2 sind fest mit dem Elektrolysemodul 20 verbunden. Ein Elektrolysemodul 20 wird typischerweise mit zwei Verankerungseinheiten verbunden. Für den Fall, dass das Elektrolysemodul 20 im Betrieb Zugbelastungen, insbesondere aufgrund von Schwingungen oder Vibrationen, auf die Verankerungseinheit 1 aufbringt, wird eine elektrische Isolierung zum Boden hindurch die Verankerungseinheit vorteilhaft gewährleistet. Auch für den Fall, dass Wasser aus einem Elektrolysemodul 20 austritt, kann ein Kurzschluss über die Verankerungseinheit 1 aufgrund der Anordnung der Isolationsschichten, der Abdeckung und der Schrauben vermieden werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Verankerungseinheit
- 2: erste Schraube
- 3: zweite Schraube
- 4: erste Isolationsschicht
- 5: zweite Isolationsschicht
- 6: Tragschicht
- 7: Abdeckung
- 8: Ankergegenstand
- 9: isolierende Unterlegscheibe
- 10: Isolationshülle
- 12: erster Schraubkopf
- 13: zweiter Schraubkopf
- 14: erster Schraubschaft
- 15: zweiter Schraubschaft
- 20: Elektrolyseur
- 100: Anlage

## Patentansprüche

1. Verankerungseinheit (1) für eine Anlage (20) mit
- wenigstens einer ersten Isolationsschicht (4) und wenigstens einer zweiten Isolationsschicht (5),
- einer Tragschicht (6) zum mechanischen Stabilisieren der Isolationsschichten (4, 5), wobei die Tragschicht (6) zwischen der ersten Isolationsschicht (4) und zweiten Isolationsschicht (5) angeordnet ist,
- wenigstens zwei Schrauben, wobei die Schrauben entgegensetzt ausgerichtet sind, wobei eine erste Schraube (2) zur Verankerung an der Anlage (20) geeignet ist und eine zweite Schraube (3) zur Verankerung an einem Ankergegenstand (8) geeignet ist, wobei ein erster Schraubschaft (14) der ersten Schraube (2) und/oder ein zweiter Schraubschaft (15) der zweiten Schraube (3) wenigstens teilweise von einer elektrische isolierenden Isolationshülle (10) umgeben ist.

2. Verankerungseinheit (1) nach Anspruch 1, wobei ein zweiter Schraubschaft (15) der zweiten Schraube (3) wenigstens teilweise in der zweiten Isolationsschicht (5) angeordnet ist.

3. Verankerungseinheit (1) nach einem der vorhergehenden Ansprüche, wobei ein erster Schraubschaft (14) der ersten Schraube (2) wenigstens teilweise in der ersten Isolationsschicht (4) angeordnet ist.

4. Verankerungseinheit (1) nach einem der vorhergehenden Ansprüche, wobei wenigstens die erste Isolationsschicht (4) und die Tragschicht (6) von einer elastischen elektrisch isolierenden wasserdichten Abdeckung (7) umgeben sind.

5. Verankerungseinheit (1) nach einem der vorhergehenden Ansprüche, wobei zwischen dem ersten Schraubkopf (12) und der Tragschicht (6) und/oder zwischen dem zweiten Schraubkopf (13) und der Tragschicht (6) eine isolierende Scheibe (9) angeordnet ist.

6. Verankerungseinheit (1) nach einem der vorhergehenden Ansprüche, wobei die ersten Schraube (2) in direktem Kontakt mit der zweiten Isolationsschicht (5) steht.

7. Verankerungseinheit (1) nach einem der vorhergehenden Ansprüche, wobei die Tragschicht (6) eine erste Aussparung zum Versenken des Schraubkopfes (12) der ersten Schraube (2) aufweist und/oder eine zweite Aussparung, die auf der gegenüberliegenden Seite der Tragschicht (6) versetzt zur ersten Aussparung angeordnet ist, zum Versenken des Schraubkopfes (13) der zweiten Schraube (3) aufweist.

8. Verankerungseinheit (1) nach einem der vorhergehenden Ansprüche, wobei der zweite Schraubschaft (15) der zweiten Schraube (3) in einer elastischen Hülle angeordnet ist.

9. Verankerungseinheit (1) nach einem der vorhergehenden Ansprüche, wobei die Verankerungseinheit (1) zwei erste Schrauben (2) und zwei zweite Schrauben (3) aufweist.

10. Verankerungseinheit (1) nach Anspruch 9, wobei die zwei ersten Schrauben (2) und die zwei zweiten Schrauben (3) spiegelsymmetrisch zu einer vertikal zur Tragschicht (6) verlaufenden Symmetrieachse angeordnet sind.

11. Verfahren zum Befestigen einer Anlage (20) an einem Ankergegenstand (8) mit folgenden Schritten:
- Bereitstellen einer Verankerungseinheit (1) mit wenigstens einer ersten Isolationsschicht (4) und wenigstens einer zweiten Isolationsschicht (5), einer Tragschicht (6) zum mechanisch Stabilisieren der Isolationsschichten, wobei die Tragschicht (6) zwischen der ersten Isolationsschicht (4) und zweiten Isolationsschicht (5) angeordnet ist, mit wenigstens zwei Schrauben, wobei die Schrauben zueinander entgegensetzt ausgerichtet sind, wobei eine erste Schraube (2) zur Verankerung an der Anlage (20) geeignet ist und eine zweite Schraube (3) zur Verankerung an einem Ankergegenstand (8) geeignet ist, wobei der erste Schraubschaft (14) der ersten Schraube (2) und/oder der zweite Schraubschaft (15) der zweiten Schraube (3) wenigstens teilweise von einer Isolationshülle (10) umgeben ist.
- Befestigen einer Anlage (20) mit der ersten Schraube (2) an der Verankerungseinheit (1),
- Befestigen der Verankerungseinheit (1) mit der zweiten Schraube (3) am Ankergegenstand (8).

12. Verfahren nach Anspruch 11, wobei als Ankergegenstand (8) der Boden, eine Wand oder ein mechanisch festes Bauteil verwendet wird.

13. Anlageneinheit (100) mit einer Verankerungseinheit (1) gemäß einem der Ansprüche 1 bis 10, wobei die erste Schraube (2) mit einer Anlage (20) verbunden ist und die zweite Schraube (3) mit dem Ankergegenstand (8) verbunden ist.
